(19) Europäisches Patentamt
European Patent Office
Office européen des brevets

(11) **EP 3 166 069 A1**

(12) **EUROPEAN PATENT APPLICATION**

(43) Date of publication:
10.05.2017 Bulletin 2017/19

(51) Int Cl.:
*G06T 3/40* (2006.01)   *G06T 5/00* (2006.01)

(21) Application number: 15306772.3

(22) Date of filing: 06.11.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(71) Applicant: Thomson Licensing
92130 Issy-les-Moulineaux (FR)

(72) Inventors:
• Hortelano, Oscar
30265 Hannover (DE)
• Salvador Marcos, Jordi
20257 Hamburg (DE)
• Ruiz Hidalgo, Javier
08901 L'Hospitalet de Llobregat (ES)

(74) Representative: Huchet, Anne et al
TECHNICOLOR
1-5, rue Jeanne d'Arc
92130 Issy-les-Moulineaux (FR)

(54) **METHOD FOR DENOISING AN IMAGE AND APPARATUS FOR UPSCALING AN IMAGE**

(57) Image upscaling by super-resolution based on self-similarity can be improved by including a similar image. In particular, motion information providing a relationship between an image to be upscaled and a similar image can be used to easily extend self-similarity to the similar image.

$$x_{HR}^{t_0} = x_{LR}^{t_0} + R([y_{HR}^{t_0}; y_{HR}^{t_1}] - [y_{LR}^{t_0}; y_{LR}^{t_1}])$$

Fig.3

## Description

Field of the invention

This invention relates to a method for upscaling an image and apparatus for upscaling an image.

Background

Freeman et al. **[Freeman]** started to exploit multi-scale self-example relationship of an image. They generate a dictionary of low-resolution (LR) and high-resolution (HR) patch pairs from an image database to create plausible information for other images with a Markov network type algorithm that abuse the HR-LR patch relation, and an HR neighbor relationship between patches provided by the overlapping patch scheme selection. This scheme has a main issue, it requires an enormous quantity of patch-pairs to generate the desired dictionary, and therefore, it becomes computational expensive.

Yang et al. **[Yang]** introduced the usage of dictionaries to find a compact representation of the data for LR-HR patch pairs to capture the co-occurrence prior using sparse signal segmentation in the generation of dictionaries. The main idea is to enforce image patch pairs to have the same sparse representations over both LR and HR dictionaries. Sparse dictionaries have to be jointly learned, because the same sparse representation is needed to represent the low and high resolution patches in their corresponding dictionaries.

Summary of the Invention

The present invention is based on the recognition of the fact that image upscaling by super-resolution based on self-similarity can be improved by including a similar image.

In particular, motion information providing a relationship between an image to be upscaled and a similar image can be used to easily extend self-similarity to the similar image.

According to an embodiment of the invention, a method for upscaling an input image comprises initializing an upscaled image ($X_{HR}^{t_0}$) ; computing **(20)** motion information for the input image by comparing it with a second image ($X_{LR}^{t_1}$) , wherein inter-frames correspondences are found; upscaling **(30)** the input image by interpolation to obtain a coarse upscaled image ($Y_{HR}^{t_0}$) , and upscaling **(35)** the second image ($X_{LR}^{t_1}$) by interpolation to obtain a coarse upscaled second image ($Y_{HR}^{t_1}$) ; low-pass filtering **(40)** the input image to obtain a LP filtered input image ($Y_{LR}^{t_0}$) , and low-pass filtering **(45)** the second image ($X_{LR}^{t_1}$) to obtain a LP filtered second image ($Y_{LR}^{t_1}$) ; dividing **(50)** the images ($X_{LR}^{t_0}$, $X_{HR}^{t_0}$, $X_{LR}^{t_1}$, $Y_{LR}^{t_0}$, $Y_{HR}^{t_0}$, $Y_{LR}^{t_1}$, $Y_{HR}^{t_1}$) into overlapping patches, wherein all patches have equal size;
for a current patch of the upscaled image ($X_{HR}^{t_0}$) , determining **(60)** a first patch ($y_{LR}^{t_0}$) in the LP filtered input image ($Y_{LR}^{t_0}$) in a position substantially corresponding to that of the current patch (in-place),
a second patch ($y_{LR}^{t_1}$) in the LP filtered second image ($Y_{LR}^{t_1}$) in a position that, according to said motion information, corresponds to that the first patch ($y_{LR}^{t_0}$) ,
a third patch ($y_{HR}^{t_0}$) in the coarse upscaled image ($Y_{HR}^{t_0}$) at a position substantially corresponding to that of the first patch ($y_{LR}^{t_0}$) (in-place), and
a fourth patch ($y_{HR}^{t_1}$) in the coarse upscaled second image ($Y_{HR}^{t_1}$) at a position substantially corresponding to that of the second patch ($y_{LR}^{t_1}$) (in-place) ;
applying **(70)** a trained regressor (R($z_{HR}$-$z_{LR}$)) to one of:
($z_{HR} = y_{HR}^{t_0}$, $z_{LR} = y_{LR}^{t_0}$) a difference between the first patch ($y_{LR}^{t_0}$) and the third patch ($y_{HR}^{t_0}$) , and
($z_{HR} = [y_{HR}^{t_0} : y_{HR}^{t_1}]$, $z_{LR} = [y_{LR}^{t_0} : y_{LR}^{t_1}]$) a difference between a concatenation of the vectorized first and second patches ($[y_{LR}^{t_0} ; y_{LR}^{t_1}]$) and a concatenation of the vectorized third and fourth patches ($[y_{HR}^{t_0} ; y_{HR}^{t_1}]$) , wherein a high-frequency patch is obtained; and adding **(80)** the obtained high-frequency patch to a fifth patch ($x_{LR}^{t_0}$) being a patch of the input image ($X_{LR}^{t_0}$) at a position of the first patch ($y_{LR}^{t_0}$) (in-place) to obtain a patch ($x_{HR}^{t_0}$) of the upscaled image ($X_{HR}^{t_0}$) .

An apparatus for upscaling an image, in one embodiment, is disclosed in claim 11.

In one embodiment, the invention relates to a non-transitory computer readable storage medium having stored thereon executable instructions to cause a computer to perform a method for upscaling an image as disclosed above.

Advantageous embodiments of the invention are disclosed in the dependent claims, the following description and the figures.

Brief description of the drawings

Exemplary embodiments of the invention are described with reference to the accompanying drawings, which show in

Fig.1 a flow-chart of a method for upscaling an image;
Fig.2 a block diagram of an apparatus for upscaling an image;
Fig.3 an overview of used images and patches;
Fig.4 a training scheme; and
Fig.5 an image upscaling scheme.

Detailed description of the invention

The goal of image super-resolution (SR) is to perform a transformation of an input low-resolution (LR) patch to a high-resolution (HR) version thereof, by recovering as much as possible of the lost high resolution information.

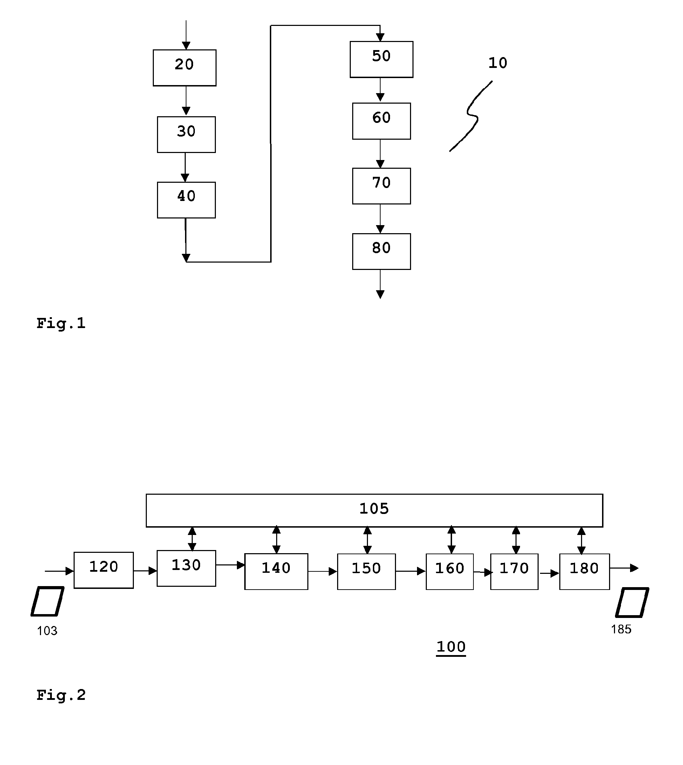

Fig.1 shows in one embodiment a flow-chart of a method for upscaling an input image $X_{LR}^{t_0}$ to obtain an upscaled image $X_{HR}^{t_0}$. The method **10** comprises initializing an upscaled image $X_{HR}^{t_0}$, computing **20** motion information for the input image by comparing it with a second image $X_{LR}^{t_1}$, wherein inter-frames correspondences are found, upscaling **30** the input image by interpolation to obtain a coarse upscaled image $Y_{HR}^{t_0}$, and upscaling **35** the second image $X_{LR}^{t_1}$ by interpolation to obtain a coarse upscaled second image $Y_{HR}^{t_1}$, low-pass (LP) filtering **40** the input image to obtain a LP filtered input image $Y_{LR}^{t_0}$, and low-pass filtering **45** the second image $X_{LR}^{t_1}$ to obtain a LP filtered second image $Y_{LR}^{t_1}$. Further steps comprise dividing **50** the images into overlapping patches, wherein all patches have equal size, and, for a current patch of the upscaled image $X_{HR}^{t_0}$, determining **60** a first patch $y_{LR}^{t_0}$ in the LP filtered input image $Y_{LR}^{t_0}$ in a position substantially corresponding to that of the current patch (in-place), a second patch $y_{LR}^{t_1}$ in the LP filtered second image $Y_{LR}^{t_1}$ in a position that, according to said motion information, corresponds to that the first patch $y_{LR}^{t_0}$,

a third patch $y_{HR}^{t_0}$ in the coarse upscaled image $Y_{HR}^{t_0}$ at a position substantially corresponding to that of the first patch $y_{LR}^{t_0}$ (in-place), and

a fourth patch $y_{HR}^{t_1}$ in the coarse upscaled second image $Y_{HR}^{t_1}$ at a position substantially corresponding to that of the second patch $y_{LR}^{t_1}$ (in-place) ;

applying **70** a trained regressor $R(z_{HR}$-$z_{LR})$ to one of:

(in the case of $z_{HR} = y_{HR}^{t_0}$, $z_{LR} = y_{LR}^{t_0}$) a difference between the first patch $y_{LR}^{t_0}$ and the third patch $y_{HR}^{t_0}$, and

(in the case of $z_{HR} = [y_{HR}^{t_0} : y_{HR}^{t_1}]$, $z_{LR} = [y_{LR}^{t_0} : y_{LR}^{t_1}]$) a difference between a concatenation of the vectorized first and second patches $[y_{LR}^{t_0} : y_{LR}^{t_1}]$ and a concatenation of the vectorized third and fourth patches $[y_{HR}^{t_0} : y_{HR}^{t_1}]$, wherein a high-frequency patch is obtained, and

adding **80** the obtained high-frequency patch to a fifth patch $x_{LR}^{t_0}$ being a patch of the input image $X_{LR}^{t_0}$ at a position of the first patch $y_{LR}^{t_0}$ (in-place) to obtain a patch $x_{HR}^{t_0}$ of the upscaled image $X_{HR}^{t_0}$.

Parting from the pair of input images, the invention performs for both a low-frequency (LF) estimation of the output by an interpolation method (e.g. bicubic). The invention computes a motion estimator to find inter-frames correspondences between pixels. By this estimator, for each patch its inter-frame correspondence is found. Then, it is possible to find for both images the in-place matches extracted from the relation between the LR input and the HR coarse estimation previously computed. With this set of patches extracted from the single input patch, a previously trained linear mapping function is then found that corresponds to them, thus estimating the desired output patch through simple matrix multiplication. For further improvements, also a selector can be applied to find the best estimate between in-place examples and intra-frame examples. The linear mapping function is found in offline training.

With the invention it is possible to recover HR patches from self-examples and from inter-frame examples. Thus, due to usage of sub-pixel accuracy information, it is possible to reduce artifacts that cannot be handled via regular single image SR approaches. Thus, the performance of SR is improved.

Fig.2 shows a block diagram of an apparatus for upscaling an image. In one embodiment, an apparatus **100** for upscaling an input image $X_{LR}^{t_0}$ comprises

means **110** being adapted for initializing an upscaled image $X_{HR}^{t_0}$,

means **120** being adapted for computing motion information for the input image by comparing it with a second image $X_{LR}^{t_1}$, wherein inter-frames correspondences are found,

means **130** being adapted for upscaling the input image by interpolation to obtain a coarse upscaled image $Y_{HR}^{t_0}$,

and upscaling 135 the second image $X_{LR}^{t_1}$ by interpolation to obtain a coarse upscaled second image $Y_{HR}^{t_1}$,

filtering means **140** being adapted for low-pass filtering the input image to obtain a LP filtered input image $Y_{LR}^{t_0}$,

and filtering means **145** being adapted for low-pass filtering the second image $X_{LR}^{t_1}$ to obtain a LP filtered second image $Y_{LR}^{t_1}$, means **150** being adapted for dividing the images $X_{LR}^{t_0}$, $X_{HR}^{t_0}$, $X_{LR}^{t_1}$, $Y_{LR}^{t_0}$, $Y_{HR}^{t_0}$, $Y_{LR}^{t_1}$, $Y_{HR}^{t_1}$ into overlapping patches, wherein all patches have equal size,

means **160** being adapted for determining, for a current patch of the upscaled image $X_{HR}^{t_0}$,

a first patch $y_{LR}^{t_0}$ in the LP filtered input image $Y_{LR}^{t_0}$ in a position substantially corresponding to that of the current patch (in-place),

a second patch $y_{LR}^{t_1}$ in the LP filtered second image $Y_{LR}^{t_1}$ in a position that, according to said motion information, corresponds to that the first patch $y_{LR}^{t_0}$,

a third patch $y_{HR}^{t_0}$ in the coarse upscaled image $Y_{HR}^{t_0}$ at a position substantially corresponding to that of the first patch $y_{LR}^{t_0}$ (in-place), and

a fourth patch $y_{HR}^{t_1}$ in the coarse upscaled second image $Y_{HR}^{t_1}$ at a position substantially corresponding to that of the second patch $y_{LR}^{t_1}$ (in-place),

means **170** being adapted for applying a trained regressor R($z_{HR}$-$z_{LR}$) to one of:

(in the case of $z_{HR} = y_{HR}^{t_0}$, $z_{LR} = y_{LR}^{t_0}$:) a difference between the first patch $y_{LR}^{t_0}$ and the third patch $y_{HR}^{t_0}$, and

(in the case of $z_{HR} = [y_{HR}^{t_0}:y_{HR}^{t_1}]$, $z_{LR} = [y_{LR}^{t_0}:y_{LR}^{t_1}]$) a difference between a concatenation of the vectorized first and second patches $[y_{LR}^{t_0};y_{LR}^{t_1}]$ and a concatenation of the vectorized third and fourth patches $[y_{HR}^{t_0};y_{HR}^{t_1}]$,

wherein a high-frequency patch is obtained; and means **180** being adapted for adding the obtained high-frequency patch to a fifth patch $x_{LR}^{t_0}$ being a patch of the input image $X_{LR}^{t_0}$ at a position of the first patch $y_{LR}^{t_0}$ (in-place) to obtain a patch $x_{HR}^{t_0}$ of the upscaled image $X_{HR}^{t_0}$.

In one embodiment, the apparatus **100** further comprises a controller **105** being a module adapted for controlling some or all of the other modules.

One advantage of the above-described method and apparatus is that searching for a similar patch is reduced to a minimum, due to in-place patch selection.

For easier explanation, the algorithm is separated into three phases: data collection, training, and data reconstruction.

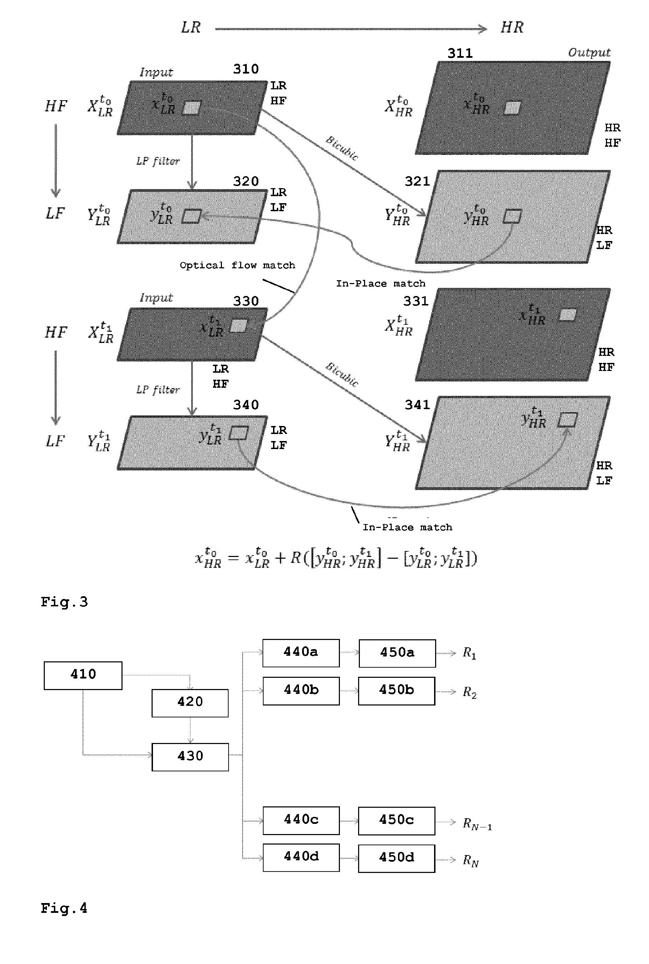

Fig.3 shows an overview of used images and patches. For data collection, a motion estimator (e.g. an optical flow method) is performed between the two input images **310,330** in order to derive an inter-frame matching function. For example, any conventional motion estimation can be used. Further, image transformations shown in Fig.3 are performed to the input images **310,330**: bicubic interpolation to obtain their HR counterpart **321,341,** and Gaussian low pass (LP) filtering to obtain their respective LF versions **320,340.**

For each output patch location, their matches both inter-frame and in-place are found. We will call this group of patches "patch relatives" herein.

The in-place match is found by dividing the HR patch position by the employed scaling factor. As this value is normally not an integer, also a nearest neighbor search is performed between several (e.g. nine) patches that are closest to the desired LR position.

The inter-frame match is found by the optical flow mapping function (e.g. motion information) previously estimated. The same nearest neighbor search as in the previous step is done to find an integer patch position.

Fig.4 shows a training scheme. Both the LR input and the ground truth HR output must be available to perform the mapping function training. The training comprises two main steps: partitioning the patch space (e.g. by clustering), and finding the mapping function for each partition (e.g. for each cluster).

For partitioning the patch space, a regression function R is used that operates according to

$$x_{HR}^{t_0} = x_{LR}^{t_0} + R(z_{HR} - z_{LR}).$$

That is, a HR patch is obtained by adding the output of the regression function R to a patch of the input image, which is considered as LR image. Two scenarios are contemplated: one uses just the in-place scheme, and the other one mixes in-place and inter-frame schemes. Their only difference is the definition of the argument z of the regression function, ie. the features z used for training: for the in-place scheme, z is a patch obtained from the current input image, denoted by t0, according to $z = y^{t0}$.

For the mixed case, z is a patch obtained from both the current input image and a second input image denoted by $t_1$, according to $z = [y^{t0};y^{t1}]$, where the semicolon operator means a concatenation of the vectorized patches.

In one embodiment to perform the space partition, n features $z_{LR}$ of the training examples (that may previously be normalized) are gathered, and a K-SVD algorithm is computed with them. The K-SVD output vectors will become the anchor points (or reference members) for each of the space partitions, ie. clusters.

To fill these space partitions with data, a K-nearest neighbor search with k=1300 for each anchor point will then be performed with the training features, in one embodiment. After having obtained each neighborhood, the following equation is applied to find the mapping matrix:

$$R_i = (X^T X)^{-1} X^T y$$

with $y = x_{HR}^{t_0} - x_{LR}^{t_0}$ and X = $z_{HR}$ - $z_{LR}$.

Fig.4 shows a corresponding training scheme. The blocks in Fig.4 constitute the following: Training data 410 are input to data normalization 420 and a K-SVC algorithm 430. The K-SVC algorithm 430 provides as its output a partitioning of the patches, resulting in a plurality of partitions 440a,..., 440d (generally, a given number N). For each partition, a mapping function 450a,...,450d is computed and stored as a regressor R₁,...,Rₙ. When the regressor gets an input patch, it applies the respective mapping function to the input patch and provides an output patch.

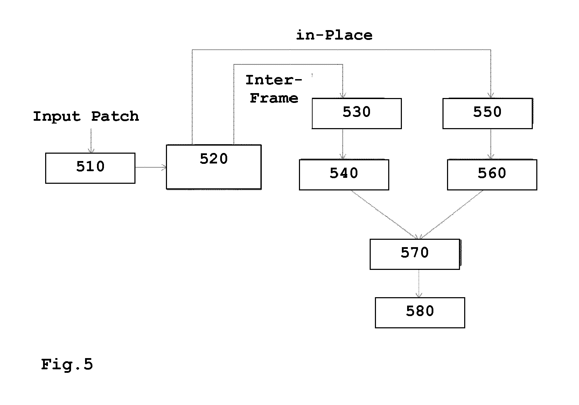

Fig.5 shows data reconstruction, in one embodiment. For each image, the same image transformations are performed as shown above in the data collection chapter. We will then, from the HR LF image, partition the image in overlapping 3x3 patches (or similar size), and obtain the relatives of each patch as previously explained. We will then divide the analysis into two branches, an in-place branch and an in-place/inter-frame mixed branch, where the only difference is the definition of z. It is as explained in the training process, and the matrix previously learned is used. To find the associated partition to each input patch, we will find the nearest neighbor to z among the learned anchor points for both cases. As each partition has a previously trained matrix R, we just have to recover the estimate of our super-resolution patch.

$$x_{HR}^{t_0} = x_{LR}^{t_0} + R(z_{HR} - z_{LR})$$

Having obtained both estimated patches, we then perform a selection of the best match with an offline selector previously trained with a Supervised learning algorithm. It could be adaptive boosting (AdaBoost), for instance.

The final scheme can be seen in Fig.5. The meaning of the blocks in Fig.5 is as follows: input patches are provided to a find relatives block 510, which provides the relatives toa scheme selector block 520. It selects either in-place mode or inter-frame mode, or both. In the case of in-place mode, an associated in-place partition is determined 550. E.g., it is a cluster whose representative patch is most similar to the input patch. As described above, the partition is associated with a mapping function, which may be a matrix. The mapping function is applied to the patch 560, e.g. by matrix multiplication, and provides an upscaled patch to a best-match selector block 570. On the other hand, if inter-frame mode is selected, an associated inter-frame partition is determined 530. Also this partition is associated with a mapping function, which may be a matrix. The mapping function is applied to the patch 540, e.g. by matrix multiplication, and provides an upscaled patch to the best-match selector block 570. If the scheme selector block 520 has selected both modes, the best-match selector block 570 selects the best matching patch, otherwise it selects the only available patch. It outputs 580 the upscaled patch for assembling the upscaled image. When all the patches are obtained, they are just superposed at their original positions and adequately averaged to provide the desired final image output.

It is noted that each of the above-mentioned modules may be implemented, individually and independent from the others, as a hardware (HW) module, a software (SW) module or a SW-controlled HW module, wherein the apparatus for denoising comprises at least one HW module.

In an embodiment of the above-described method 100, the trained regressor is applied to both differences, and a best matching high-frequency patch is selected by a supervised learning algorithm.

One advantage of the invention is the way it handles sub-pixel accuracy. It can handle very well the recovery of fine structures on scenes with horizontal or vertical motion, which cannot be handled by single image super-resolution methods.

In an embodiment of the above-described method, said substantially corresponding positions are determined within a search window around exactly corresponding positions.

In an embodiment of the above-described method, said position is found by dividing a high resolution patch position by a scaling factor and truncating the result to integers, further comprising a nearest neighbor search between nine patches that are adjacent to the resulting position.

In an embodiment, the above-described method further comprises steps of normalizing all patches after the dividing step, storing normalization information, and denormalizing the patches before said adding step, using the stored normalization information.

In an embodiment, the second image is temporally adjacent to the input image in an image sequence.

In an embodiment, the input image and the input image are still images showing a similar but different scene.

In an embodiment, the above-described method further comprises a training phase using LR and corresponding HR training images, the training phase comprising steps of partitioning a patch space for patches of the training images, and determining, for each partition, a mapping function as said trained regressor.

In an embodiment, the partitioning comprises computing clusters using a K-SVD algorithm and normalized training patches.

In an embodiment, patches are of size 5x5 pixels and overlap by 3 pixels in at least one dimension.

The use of the verb "comprise" and its conjugations herein does not exclude the presence of elements or steps other than those stated in a claim. Furthermore, the use of the article "a" or "an" preceding an element does not exclude the presence of a plurality of such elements. "Modules" may be hardware or software items. Several "means" or "modules" may be represented by the same item of hardware or software. Furthermore, the invention resides in each and every novel feature or combination of features.

The term "upscaling" as used herein does not describe a mere mathematical abstraction, but instead denotes information embodied in or carried by a physical medium capable of detection by a machine or apparatus. This term includes recorded or transmitted signals, and should be understood to include conveyance by any form of encoding, including but not limited to pulse code modulation (PCM).

While there has been shown, described, and pointed out fundamental novel features of the present invention as applied to preferred embodiments thereof, it will be understood that various omissions and substitutions and changes in the apparatus and method described, in the form and details of the devices disclosed, and in their operation, may be made by those skilled in the art, within the scope of the present invention. It is expressly intended that all combinations of those elements that perform substantially the same function in substantially the same way to achieve the same results are within the scope of the invention. Substitutions of elements from one described embodiment to another are also fully intended and contemplated. It will be understood that the present invention has been described purely by way of example, and modifications of detail can be made within the scope of the invention. Each feature disclosed in the description and the claims and drawings may be provided independently or in any appropriate combination. Features may, where appropriate be implemented in hardware, software, or a combination of the two. Connections may, where applicable, be implemented as wireless connections or wired, not necessarily direct or dedicated, connections. Reference numerals appearing in the claims are by way of illustration only and shall have no limiting effect on the scope of the claims.

Cited References

**[Freeman]** "Example-Based Super-Resolution", William T. Freeman, Thouis R. Jones, and Egon C. Pasztor Mitsubishi Electric Research Labs

**[Yang]** "Image super resolution via sparse representation", J. Yang, J. Wright, T. Huang, and Y. Ma

**Claims**

1. A method **(10)** for upscaling an input image $(X_{LR}^{t_0})$ to obtain an upscaled image $(X_{HR}^{t_0})$, comprising

    - initializing an upscaled image $(X_{HR}^{t_0})$;
    - computing **(20)** motion information for the input image by comparing it with a second image $(X_{LR}^{t_1})$, wherein inter-frames correspondences are found;
    - upscaling **(30)** the input image by interpolation to obtain a coarse upscaled image $(Y_{HR}^{t_0})$, and upscaling **(35)** the second image $(X_{LR}^{t_1})$ by interpolation to obtain a coarse upscaled second image $(Y_{HR}^{t_1})$;
    - low-pass filtering **(40)** the input image to obtain a LP filtered input image $(Y_{LR}^{t_0})$, and low-pass filtering **(45)** the second image $(X_{LR}^{t_1})$ to obtain a LP filtered second image $(Y_{LR}^{t_1})$;
    - dividing **(50)** the images

$(X_{LR}^{t_0}, X_{HR}^{t_0}, X_{LR}^{t_1}, Y_{LR}^{t_0}, Y_{HR}^{t_0}, Y_{LR}^{t_1}, Y_{HR}^{t_1})$ in-to overlapping patches, wherein all patches have equal size;

for a current patch of the upscaled image $(X_{HR}^{t_0})$,

- determining **(60)** a first patch $(y_{LR}^{t_0})$ in the LP filtered input image $(Y_{LR}^{t_0})$ in a position substantially corresponding to that of the current patch (in-place), a second patch $(y_{LR}^{t_1})$ in the LP filtered second image $(Y_{LR}^{t_1})$ in a position that, according to said motion information, corresponds to that the first patch $(y_{LR}^{t_0})$, a third patch $(y_{HR}^{t_0})$ in the coarse upscaled image $(Y_{HR}^{t_0})$ at a position substantially corresponding to that of the first patch $(y_{LR}^{t_0})$ (in-place), and a fourth patch $(y_{HR}^{t_1})$ in the coarse upscaled second image $(Y_{HR}^{t_1})$ at a position substantially corresponding to that of the second patch $(y_{LR}^{t_1})$ (in-place);

- applying **(70)** a trained regressor (R($z_{HR}$-$z_{LR}$)) to one of:

  - $(z_{HR} = y_{HR}^{t_0}, z_{LR} = y_{LR}^{t_0})$ a difference between the first patch $(y_{LR}^{t_0})$ and the third patch $(y_{HR}^{t_0})$, and

  - 
  $$(z_{HR} = [y_{HR}^{t_0}:y_{HR}^{t_1}], z_{LR} = [y_{LR}^{t_0}:y_{LR}^{t_1}])$$
  a difference between a concatenation of the vectorized first and second patches $([y_{LR}^{t_0}; y_{LR}^{t_1}])$ and a concatenation of the vectorized third and fourth patches $([y_{HR}^{t_0}; y_{HR}^{t_1}])$,

  wherein a high-frequency patch is obtained; and
- adding **(80)** the obtained high-frequency patch to a fifth patch $(x_{LR}^{t_0})$ being a patch of the input image $(X_{LR}^{t_0})$ at a position of the first patch $(y_{LR}^{t_0})$ (in-place) to obtain a patch $(x_{HR}^{t_0})$ of the upscaled image $(X_{HR}^{t_0})$.

**2.** The method according to claim 1, wherein the trained regressor is applied to both differences, and a best matching high-frequency patch is selected by a supervised learning algorithm.

**3.** The method according to claim 1 or 2, wherein said substantially corresponding positions are determined within a search window around exactly corresponding positions.

**4.** The method according to claim 3, wherein said position is found by dividing a high resolution patch position by a scaling factor and truncating the result to integers, further comprising a nearest neighbor search between nine patches that are adjacent to the resulting position.

**5.** The method according to one of the claims 1-4, further comprising steps of

  - normalizing all patches after the dividing step;
  - storing normalization information; and
  - denormalizing the patches before said adding step, using the stored normalization information.

**6.** The method according to one of the claims 1-5, wherein the second image is temporally adjacent to the input image in an image sequence.

**7.** The method according to one of the claims 1-6, wherein the input image and the input image are still images showing a different scene.

**8.** The method according to one of the claims 1-7, further comprising a training phase using LR and corresponding HR training images, the training phase comprising steps of

  - partitioning a patch space for patches of the training images; and
  - determining, for each partition, a mapping function as said trained regressor.

**9.** The method according to claim 8, wherein the partitioning comprises computing clusters using a K-SVD algorithm and normalized training patches.

**10.** The method according to any of the claims 1-9, wherein patches are of size 5x5 pixels and overlap by 3 pixels in at least one dimension.

**11.** An apparatus for upscaling an image, comprising a processor and a memory storing instructions that, when executed by the processor, cause the processor to perform a method according to any of the claims 1-10.

**12.** An apparatus **(100)** for upscaling an input image

$(X_{LR}^{t_0})$ , comprising

- means **(110)** being adapted for initializing an upscaled image $(X_{HR}^{t_0})$ ;
- means **(120)** being adapted for computing motion information for the input image by comparing it with a second image $(X_{LR}^{t_1})$ , wherein inter-frames correspondences are found;
- means **(130)** being adapted for upscaling the input image by interpolation to obtain a coarse upscaled image $(Y_{HR}^{t_0})$ , and upscaling (35) the second image $(X_{LR}^{t_1})$ by interpolation to obtain a coarse upscaled second image $(Y_{HR}^{t_1})$ ;
- filtering means **(140)** being adapted for low-pass filtering the input image to obtain a LP filtered input image $(Y_{LR}^{t_0})$ , and filtering means **(145)** being adapted for low-pass filtering the second image $(X_{LR}^{t_1})$ to obtain a LP filtered second image $(Y_{LR}^{t_1})$ ;
- means **(150)** being adapted for dividing the images $(X_{LR}^{t_0},\ X_{HR}^{t_0},\ X_{LR}^{t_1},\ Y_{LR}^{t_0},\ Y_{HR}^{t_0},\ Y_{LR}^{t_1},\ Y_{HR}^{t_1})$ into overlapping patches, wherein all patches have equal size;
- means **(160)** being adapted for determining, for a current patch of the upscaled image $(X_{HR}^{t_0})$ , a first patch $(y_{LR}^{t_0})$ in the LP filtered input image $(Y_{LR}^{t_0})$ in a position substantially corresponding to that of the current patch (in-place), a second patch $(y_{LR}^{t_1})$ in the LP filtered second image $(Y_{LR}^{t_1})$ in a position that, according to said motion information, corresponds to that the first patch $(y_{LR}^{t_0})$ , a third patch $(y_{HR}^{t_0})$ in the coarse upscaled image $(Y_{HR}^{t_0})$ at a position substantially corresponding to that of the first patch $(y_{LR}^{t_0})$ (in-place), and a fourth patch $(y_{HR}^{t_1})$ in the coarse upscaled second image $(Y_{HR}^{t_1})$ at a position substantially corresponding to that of the second patch

$(y_{LR}^{t_1})$ (in-place);
- means **(170)** being adapted for applying a trained regressor $(R(z_{HR}\text{-}z_{LR}))$ to one of:

- $(z_{HR} = y_{HR}^{t_0},\ z_{LR} = y_{LR}^{t_0})$ a difference between the first patch $(y_{LR}^{t_0})$ and the third patch $(y_{HR}^{t_0})$ , and

-

$(z_{HR} = [y_{HR}^{t_0}:y_{HR}^{t_1}],\ z_{LR} = [y_{LR}^{t_0}:y_{LR}^{t_1}])$ a difference between a concatenation of the vectorized first and second patches $([y_{LR}^{t_0};y_{LR}^{t_1}])$ and a concatenation of the vectorized third and fourth patches $([y_{HR}^{t_0};y_{HR}^{t_1}])$ , wherein a high-frequency patch is obtained; and

- means **(180)** being adapted for adding the obtained high-frequency patch to a fifth patch $(x_{LR}^{t_0})$ being a patch of the input image $(X_{LR}^{t_0})$ at a position of the first patch $(y_{LR}^{t_0})$ (in-place) to obtain a patch $(x_{HR}^{t_0})$ of the upscaled image $(X_{HR}^{t_0})$ .

13. The apparatus according to claim 12, wherein the trained regressor is applied to both differences, further comprising a supervised learning module being adapted for selecting a best matching high-frequency patch.

14. A non-transitory computer readable storage medium having stored thereon executable instructions to cause a computer to perform a method for upscaling an input image $(X_{LR}^{t_0})$ to obtain an upscaled image $(X_{HR}^{t_0})$ , the method comprising

- initializing an upscaled image $(X_{HR}^{t_0})$ ;
- computing (20) motion information for the input image by comparing it with a second image $(X_{LR}^{t_1})$ , wherein inter-frames correspondences are found;
- upscaling (30) the input image by interpolation to obtain a coarse upscaled image $(Y_{HR}^{t_0})$ , and upscaling (35) the second image $(X_{LR}^{t_1})$ by interpolation to obtain a coarse upscaled second image $(Y_{HR}^{t_1})$ ;

- low-pass filtering (40) the input image to obtain a LP filtered input image $(Y_{LR}^{t_0})$ , and low-pass filtering (45) the second image $(X_{LR}^{t_1})$ to obtain a LP filtered second image $(Y_{LR}^{t_1})$ ;

- dividing (50) the images $(X_{LR}^{t_0}, X_{HR}^{t_0}, X_{LR}^{t_1}, Y_{LR}^{t_0}, Y_{HR}^{t_0}, Y_{LR}^{t_1}, Y_{HR}^{t_1})$ into overlapping patches, wherein all patches have equal size;

for a current patch of the upscaled image $(X_{HR}^{t_0})$ ,

- determining a first patch $(y_{LR}^{t_0})$ in the LP filtered input image $(Y_{LR}^{t_0})$ in a position substantially corresponding to that of the current patch (in-place),

a second patch $(y_{LR}^{t_1})$ in the LP filtered second image $(Y_{LR}^{t_1})$ in a position that, according to said motion information, corresponds to that the first patch $(y_{LR}^{t_0})$ , a third patch $(y_{HR}^{t_0})$ in the coarse upscaled image $(Y_{HR}^{t_0})$ at a position substantially corresponding to that of the first patch $(y_{LR}^{t_0})$ (in-place), and

a fourth patch $(y_{HR}^{t_1})$ in the coarse upscaled second image $(Y_{HR}^{t_1})$ at a position substantially corresponding to that of the second patch $(y_{LR}^{t_1})$ (in-place);

- applying a trained regressor ($R(z_{HR}-z_{LR})$) to one of:

- $(z_{HR} = y_{HR}^{t_0}, z_{LR} = y_{LR}^{t_0})$ a difference between the first patch $(y_{LR}^{t_0})$ and the third patch $(y_{HR}^{t_0})$ , and

- $(z_{HR} = [y_{HR}^{t_0} : y_{HR}^{t_1}], z_{LR} = [y_{LR}^{t_0} : y_{LR}^{t_1}])$ a difference between a concatenation of the vectorized first and second patches $([y_{LR}^{t_0} : y_{LR}^{t_1}])$ and a concatenation of the vectorized third and fourth patches $([y_{HR}^{t_0} : y_{HR}^{t_1}])$ , wherein a high-frequency patch is obtained; and

- adding the obtained high-frequency patch to a fifth patch $(x_{LR}^{t_0})$ being a patch of the input image $(X_{LR}^{t_0})$ at a position of the first patch $(y_{LR}^{t_0})$ (in-place) to obtain a patch $(x_{HR}^{t_0})$ of the upscaled image $(X_{HR}^{t_0})$ .

Fig.1

Fig.2

$$LR \longrightarrow HR$$

$$x_{HR}^{t_0} = x_{LR}^{t_0} + R([y_{HR}^{t_0}; y_{HR}^{t_1}] - [y_{LR}^{t_0}; y_{LR}^{t_1}])$$

Fig.3

Fig.4

Fig.5

Europäisches
Patentamt

European
Patent Office

Office européen
des brevets

# EUROPEAN SEARCH REPORT

Application Number

EP 15 30 6772

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/034271 A1 (SAKAGUCHI SATOSHI [JP] ET AL) 7 February 2013 (2013-02-07) <br> * abstract; figures 1-8 * <br> * paragraph [0009] * <br> * paragraph [0031] - paragraph [0190] * <br> ----- | 1-14 | INV. <br> G06T3/40 <br> G06T5/00 |
| A | WO 2014/114635 A1 (THOMSON LICENSING [FR]) 31 July 2014 (2014-07-31) <br> * abstract; figures 1-6 * <br> * page 2, line 30 - page 4, line 15 * <br> * page 5, line 10 - page 12, line 7 * <br> ----- | 1-14 | |
| A | US 2005/232514 A1 (CHEN MEI [US]) 20 October 2005 (2005-10-20) <br> * abstract; figures 1-3 * <br> * paragraph [0019] - paragraph [0025] * <br> ----- | 1-14 | |
| A | WO 2014/174087 A1 (THOMSON LICENSING [FR]) 30 October 2014 (2014-10-30) <br> * the whole document * <br> ----- | 1-14 | |
| A | EP 2 662 824 A1 (THOMSON LICENSING [FR]) 13 November 2013 (2013-11-13) <br> * the whole document * <br> ----- | 1-14 | TECHNICAL FIELDS SEARCHED (IPC) <br><br> G06T |
| A | WO 2014/174030 A1 (THOMSON LICENSING [FR]) 30 October 2014 (2014-10-30) <br> * the whole document * <br> ----- | 1-14 | |

The present search report has been drawn up for all claims

| Place of search | Date of completion of the search | Examiner |
|---|---|---|
| Munich | 6 May 2016 | Herter, Jochen |

EPO FORM 1503 03.82 (P04C01)

## ANNEX TO THE EUROPEAN SEARCH REPORT
## ON EUROPEAN PATENT APPLICATION NO.

EP 15 30 6772

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2016

| Patent document cited in search report | | Publication date | Patent family member(s) | | Publication date |
|---|---|---|---|---|---|
| US 2013034271 | A1 | 07-02-2013 | JP 2013031163 A<br>US 2013034271 A1 | | 07-02-2013<br>07-02-2013 |
| WO 2014114635 | A1 | 31-07-2014 | EP 2948922 A1<br>WO 2014114635 A1 | | 02-12-2015<br>31-07-2014 |
| US 2005232514 | A1 | 20-10-2005 | NONE | | |
| WO 2014174087 | A1 | 30-10-2014 | EP 2989607 A1<br>US 2016078600 A1<br>WO 2014174087 A1 | | 02-03-2016<br>17-03-2016<br>30-10-2014 |
| EP 2662824 | A1 | 13-11-2013 | CN 103426148 A<br>EP 2662824 A1<br>EP 2662825 A1<br>JP 2013235594 A<br>KR 20130126551 A<br>US 2013301933 A1 | | 04-12-2013<br>13-11-2013<br>13-11-2013<br>21-11-2013<br>20-11-2013<br>14-11-2013 |
| WO 2014174030 | A1 | 30-10-2014 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WILLIAM T. FREEMAN ; THOUIS R. JONES ; EGON C. PASZTOR.** Example-Based Super-Resolution. Mitsubishi Electric Research Labs

- **J. YANG ; J. WRIGHT ; T. HUANG ; Y. MA.** *Image super resolution via sparse representation*